# EUROPEAN PATENT APPLICATION

(11) **EP 3 450 501 A1**
(43) Date of publication of application: **06.03.2019**
(21) Application number: 17789531.5
(22) Date of filing: 25.04.2017
(51) Int. Cl.: C08L 67/02, C08K 3/34, C08K 5/00, C09K 3/00

(54) **POLYESTER RESIN COMPOSITION FOR DAMPING MATERIALS**

(30) Priority: 26.04.2016 JP 2016088166
(71) Applicant: Kao Corporation, Chuo-Ku Tokyo 103-8210 (JP)
(72) Inventor: ODA, Yoshiro, Wakayama 640-8580 (JP); HASEGAWA, Yoshinori, Wakayama 640-8580 (JP); SATO, Keito, Wakayama 640-8580 (JP)
(74) Representative: Hoffmann Eitle
(86) International application number: PCT/JP2017/016375
(87) International publication number: WO 2017/188249

(57) **Abstract**

A polyester resin composition for vibration-damping material containing a thermoplastic polyester resin (A) constituted of a dicarboxylic acid component and a diol component, a plasticizer (B) represented by the general formula (I): 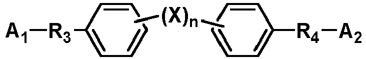 wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and -CH₂-, with proviso that a case where both R₃ and R₄ are -O- is excluded, and an inorganic filler (C). The above composition can be suitably used as a vibration-damping material in manufactured articles, such as materials for audio equipment such as speakers, and electric appliances, or parts or housing thereof.

## Description

### FIELD OF THE INVENTION

The present invention relates to a polyester resin composition for a vibration-damping material. More specifically, the present invention relates to a polyester resin composition usable as a vibration-damping material in audio equipment, electric appliances, transportation vehicles, construction buildings, industrial equipment, or the like, and a vibration-damping material containing the polyester resin composition.

### BACKGROUND OF THE INVENTION

In the recent years, countermeasures for vibrations of various equipment have been required, and especially, the countermeasures are in demand in fields such as automobiles, household electric appliances, and precision instruments. In general, materials having high vibration-damping property include materials in which a metal plate and a vibration-absorbing material such as a rubber or asphalt are pasted together, or composite materials such as vibration-damping steel plates in which a vibration-absorbing material is sandwiched with metal plates. These vibration-damping materials retain the form of high-rigidity metal plate while absorbing vibrations with a vibration-absorbing material. In addition, vibration-damping materials include alloy materials in which kinetic energy is converted to thermal energy utilizing twinning or ferromagnetization to absorb vibrations even when only metals alone are used. However, there are some disadvantages that the composite materials have limitations in molding processability because different materials are pasted together, and that a manufactured product itself becomes heavy because a metal steel plate is used. In addition, the alloy materials are also heavy because of use of metals alone, and further have been insufficient in vibration-damping property.

In view of the prior art as mentioned above, the developments of a functional resin composition that has a vibration-damping function and also other general physical properties have been made.

For example, Patent Publication 1 discloses that a material having excellent vibration damping property and excellent toughness is obtained by blending a crystalline thermoplastic polyester resin as a main component, a specified polymer selected from polyester elastomers and thermoplastic polyurethanes, and further glass fibers having a specified shape. In addition, Patent Publication 2 discloses that as a vibration-damping material using an environmental-friendly polylactic acid resin, a molded article obtained by including a specified amount of a styrene-isoprene block copolymer based on a polylactic acid resin having a specified melt flow rate has excellent vibration-damping property.

On the other hand, in order to obtain molding materials made from polyester resins, the developments of resin compositions have been made, from the viewpoint of improving moldability.

For example, in Patent Publication 3, the crystallization velocity of PET is improved by combining a crystal nucleating agent and a specified ether compound, thereby suppressing heat shrinkage when held in a high-temperature atmosphere in an injection-molded article with a mold at 80°C. Patent Publication 4 discloses a molding material in which crystallization velocity is improved by blending a polyester resin with an inorganic compound, at least one crystal nucleating agent selected from organic compounds having a metal salt of carboxyl group and polymeric compounds, and specified alkylene oxide adduct polymers of bisphenol.

Patent Publication 1: Japanese Patent Laid-Open No. Hei-3-263457
Patent Publication 2: WO 2014/034636
Patent Publication 3: Japanese Patent Laid-Open No. Sho-58-93752
Patent Publication 4: Japanese Patent Laid-Open No. Sho-59-206458

### SUMMARY OF THE INVENTION

The present invention relates to the following [1] to [3]:
[1] A polyester resin composition for vibration-damping material containing:
   a thermoplastic polyester resin (A) constituted of a dicarboxylic acid component and a diol component,
   a plasticizer (B) represented by the general formula (I): 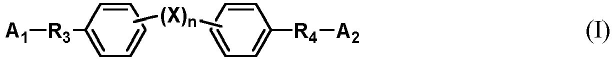 wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and -CH₂-, with proviso that a case where both R₃ and R₄ are -O- is excluded, and
   an inorganic filler (C).
[2] A vibration-damping material containing a polyester resin composition as defined in the above [1].
[3] A method for producing a part or housing, including the following steps (1) and (2):
   step (1): melt-kneading a polyester resin composition containing a thermoplastic polyester resin (A), a plasticizer (B) represented by the general formula (I), and an inorganic filler (C), to prepare a melt-kneaded product of a polyester resin composition; and
   step (2): injection-molding a melt-kneaded product of a polyester resin composition obtained in the step (1) in a mold.

### DETAILED DESCRIPTION OF THE INVENTION

As resin compositions which can replace various kinds of vibration-damping materials, further improvements in conventional polyester resin compositions are needed. In other words, the development of a polyester resin composition capable of not only making damping of vibrations faster to improve vibration-damping property, but also making an initial vibrating width of the vibrations smaller is in demand. In addition, as to the resins used in housings of household electric appliances of the recent years, vibration-damping property in a high-temperature region is even more in demand.

The present invention relates to a polyester resin composition for a vibration-damping material which can serve as a vibration-damping material having excellent vibration-damping property at a high temperature region and heat resistance, and a vibration-damping material containing the polyester resin composition.

Since the polyester resin composition of the present invention has a short vibration time as a structural member and has excellent heat resistance, in the manufactured product equipment, or apparatus or structured article that generates vibrations or noises, by using the polyester resin composition to housing or a part in the surroundings of the sources of generating vibrations or noises, or to a molded article in which vibrations or noises are directly or indirectly transmitted, or by placing the material between the sources of vibrations or noises, the generated vibrations are damped and consequently excellent effects are exhibited that extraneous vibrations pertaining to properties of manufactured products or apparatus or unpleasant vibrations, or vibrating sounds or noises are reduced.

The polyester resin composition for a vibration-damping material of the present invention has the feature of combining a thermoplastic polyester resin (A) constituted of a dicarboxylic acid component and a diol component, with a plasticizer (B) represented by the general formula (I) and an inorganic filler (C).

Generally, when an inorganic filler is added to a resin, elastic modulus of an overall resin composition is improved, while a loss factor is lowered. The lowering of this loss factor is due to a decrease in the amount of energy loss in a resin moiety because a proportion of a resin in the resin composition is reduced by addition of a filler. In view of the above, in the present invention, it has been found that a diphenyl compound represented by a specified structural formula is added, besides the addition of the inorganic filler, to the system, thereby making possible to progress the crystallization, while suppressing the lowering of the glass transition temperature, so that the lowering of loss factor can be suppressed while maintaining the elastic modulus of the resin composition even at the high-temperature region. Although the detailed mechanisms are not elucidated, it is considered as follows. The interactions between the polymer chains are moderated by the interactions due to favorable affinity based on the structures of the resin and a specified compound, so that the distances between the molecular chains themselves are stretched, thereby improving mobility of the molecules. In addition, since the above diphenyl compound has excellent heat resistance at high temperatures, the effects of the above compound are fully exhibited even when the resin composition is exposed to high temperatures. However, the present invention is not intended to be limited by these assumptions. Here, the high-temperature region as used herein means a temperature atmosphere of from 35° to 80°C, and the low-temperature region as used herein means a temperature atmosphere of from -20° to 10°C.

### [Polyester Resin Composition]

### [Thermoplastic Polyester Resin (A)]

The thermoplastic polyester resin (A) in the present invention is constituted of a dicarboxylic acid component and a diol component, and can be obtained by a combination of polycondensation of the dicarboxylic acid component and the diol component. Here, the dicarboxylic acid component as used herein embraces dicarboxylic acids and lower ester derivatives thereof, which are collectively referred to as a dicarboxylic acid component.

As the dicarboxylic acid component constituting the thermoplastic polyester resin (A), an aliphatic dicarboxylic acid, an alicyclic dicarboxylic acid, an aromatic dicarboxylic acid, or a dicarboxylic acid having a furan ring can be used. Specifically, the aliphatic dicarboxylic acid is preferably an aliphatic dicarboxylic acid having a total number of carbon atoms of from 2 to 26, which includes, for example, malonic acid, succinic acid, glutaric acid, adipic acid, suberic acid, sebacic acid, dodecanedioic acid, dimer acid, eicosanedionic acid, pimelic acid, azelaic acid, methylmalonic acid, and ethylmalonic acid. The alicyclic dicarboxylic acid is preferably an alicyclic dicarboxylic acid having a total number of carbon atoms of from 5 to 26, which includes, for example, adamantanedicarboxylic acid, norbornene dicarboxylic acid, cyclohexanedicarboxylic acid, and decalin dicarboxylic acid. The aromatic dicarboxylic acid is preferably an aromatic dicarboxylic acid having a total number of carbon atoms of from 8 to 26, which includes, for example, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyl ether dicarboxylic acid, 5-sodium sulfoisophthalic acid, phenylindane dicarboxylic acid, anthrecene dicarboxylic acid, phenanthrene dicarboxylic acid, and 9,9'-bis(4-carboxyphenyl)fluorenic acid. The dicarboxylic acid having a furan ring is preferably a dicarboxylic acid having a furan ring having a total number of carbon atoms of from 6 to 26, which includes, for example, 2,5-furandicarboxylic acid. These dicarboxylic acids can be used alone or in a combination of two or more kinds. Among them, one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred, from the viewpoint of improving Tg of the thermoplastic polyester resin (A) and improving rigidity.

As the diol component constituting the thermoplastic polyester resin (A), an aliphatic diol, an alicyclic diol, an aromatic diol, or a diol having a furan ring can be used. Specifically, the aliphatic diol is preferably an aliphatic diol and a polyalkylene glycol each having a total number of carbon atoms of from 2 to 26, which includes, for example, ethylene glycol, 1,2-propanediol, 1,3-propanediol, 1,4-butanediol, 1,2-butanediol, 1,3-butanediol, neopentyl glycol, 1,5-pentanediol, 1,6-hexanediol, diethylene glycol, triethylene glycol, polyethylene glycol, and polypropylene glycol. The alicyclic diol is preferably an alicyclic diol having a total number of carbon atoms of from 3 to 26, which includes, for example, cyclohexanedimethanol, hydrogenated bisphenol A, spiroglycol, and isosorbide. The aromatic diol is preferably an aromatic diol having a total number of carbon atoms of from 6 to 26, which includes, for example, bisphenol A, an alkylene oxide adduct of bisphenol A, 1,3-benzenedimethanol, 1,4-benzenedimethanol, 9,9'-bis(4-hydroxyphenyl)fluorene, and 2,2'bis(4'-β-hydroxyethoxyphenyl)propane. The diol having a furan ring is preferably a diol having a furan ring having a total number of carbon atoms of from 4 to 26, which includes, for example, 2,5-dihydroxyfuran. These diols can be used alone or in a combination of two or more kinds. Among them, one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran are more preferred, from the viewpoint of improving vibration-damping property.

In addition, as a combination of the dicarboxylic acid component and the diol component, it is preferable that either one of the dicarboxylic acid or the diol or both contain an aromatic ring, an alicyclic ring, or a furan ring, from the viewpoint of improving Tg of the thermoplastic polyester resin (A) and improving rigidity. Specifically, in a case where the dicarboxylic acid component is one or more members selected from the group consisting of aromatic dicarboxylic acids, alicyclic dicarboxylic acids, and dicarboxylic acids having a furan ring, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols. In a case where the dicarboxylic acid component is an aliphatic dicarboxylic acid, preferred are combinations thereof with one or more members selected from the group consisting of aromatic diols, alicyclic diols, and diols having a furan ring, and more preferred are combinations thereof with one or more aromatic diols.

The polycondensation of the above dicarboxylic acid component and the above diol component can be carried out in accordance with a known method without particular limitations.

The thermoplastic polyester resin (A) obtained, when processed as an extrusion molded article, an injection-molded article, such as a film or a sheet, or a thermoformed article, has a glass transition temperature (Tg) of preferably 20°C or higher, more preferably 25°C or higher, even more preferably 30°C or higher, and still even more preferably 35°C or higher, from the viewpoint of giving rigidity capable of supporting its own shape and improving mold processability, and from the viewpoint of improving heat resistance. In addition, the thermoplastic polyester resin has a glass transition temperature of preferably 160°C or lower, more preferably 150°C or lower, even more preferably 140°C or lower, and still even more preferably 130°C or lower, from the viewpoint of improving vibration-damping property. In order to have a glass transition temperature adjusted to the above temperature, it is effective to control the backbone structure of the polyester resin. For example, when a thermoplastic polyester resin is prepared by using a rigid component such as an aromatic dicarboxylic acid component or an alicyclic diol component as a raw material, it is possible to increase a glass transition temperature. Here, the glass transition temperatures of the resins and the elastomers as used herein can be measured in accordance with a method described in Examples set forth below.

In addition, it is preferable that the thermoplastic polyester resin (A) in the present invention has crystallinity. Generally, since there are some differences in elastic moduli between the crystalline portions and the amorphous portions of the resin, a resin matrix comprising only an amorphous portion or a crystalline portion has smaller energy loss to vibrations without causing large strains because of its homogeneous structure. On the other hand, in a resin matrix comprising a mixture of crystalline portions and amorphous portions, inhomogeneous continuous morphologies having different elastic moduli are formed, so that when vibrations are applied, large strains are locally generated in the amorphous portions having lower elastic moduli, whereby consequently generating shearing frictions based on strains to improve energy loss. Accordingly, although the thermoplastic polyester resin generally contains larger proportions of amorphous portions, it is considered that the thermoplastic polyester resin is given crystallinity in the present invention, so that it is possible to even more improve energy loss of the resin matrix. In addition, it is assumed that since the diphenyl compound (B) represented by a specified structural formula is dispersed in the present invention, the amorphous portion is made flexible or given flexibility with the above component (B), so that the elastic modulus is even more lowered to increase the above effects; therefore, loss factor is even more increased, whereby a polyester resin composition having more excellent vibration-damping property can be obtained. The method for preparing a thermoplastic polyester resin having crystallinity includes a method of using a dicarboxylic acid component and a diol component with high purity, and a method of using a dicarboxylic acid component and a diol component with a smaller side chain. Here, a resin having crystallinity as used herein refers to a resin in which exothermic peaks accompanying crystallization are observed when a resin is heated from 25°C to 300°C at a heating rate of 20°C/min, held in that state for 5 minutes, and thereafter cooled to 25°C or lower at a rate of -20°C/min, as prescribed in JIS K7122 (1999). More specifically, the resin refers to a resin having crystallization enthalpy ΔHmc obtained from areas of exothermic peaks of 1 J/g or more. As the thermoplastic polyester resin (A) constituting the present invention, it is preferable that a resin having a crystallization enthalpy ΔHmc of preferably 5 J/g or more, more preferably 10 J/g or more, even more preferably 15 J/g or more, and even more preferably 30 J/g or more is used.

Specific examples of the thermoplastic polyester resin (A) are preferably a polyethylene terephthalate constituted of terephthalic acid and ethylene glycol (PET resin, Tg: 70°C), a polytrimethylene terephthalate constituted of terephthalic acid and 1,3-propanediol (PTT resin, Tg: 50°C), a polybutylene terephthalate constituted of terephthalic acid and 1,4-butanediol (PBT resin, Tg: 50°C), 1,4-cyclohexanedimethylene terephthalate constituted of terephthalic acid and 1,4-cyclohexanedimethanol (PCT resin, Tg: 95°C), a polyethylene naphthalate constituted of 2,6-naphthalenedicarboxylic acid and ethylene glycol (PEN resin, Tg: 121°C), a polybutylene naphthalate constituted of 2,6-naphthalenedicarboxylic acid and 1,4-butanediol (PBN resin, Tg: 78°C), a polyethylene furanoate constituted of 2,5-furandicarboxylic acid and ethylene glycol (PEF resin, Tg: 87°C), and a polybutylene furanoate constituted of 2,5-furandicarboxylic acid and 1,4-butanediol (PBF resin, Tg: 35°C), and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol, from the viewpoint of rigidity, heat resistance, and vibration-damping property. These can be used alone or in a combination of two or more kinds.

The content of the thermoplastic polyester resin (A) in the polyester resin composition is preferably 50% by mass or more, more preferably 55% by mass or more, and even more preferably 60% by mass or more, from the viewpoint of improving loss factor. In addition, the content is preferably 90% by mass or less, more preferably 80% by mass or less, even more preferably 75% by mass or less, and even more preferably 70% by mass or less, from the viewpoint of improving elastic modulus.

### [Plasticizer (B)]

As the plasticizer (B), the present invention has a great feature of using a compound represented by the following general formula (I): 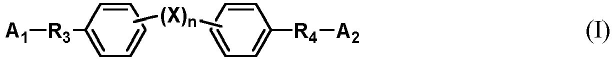 wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and - CH₂-, with proviso that a case where both R₃ and R₄ are -O- is excluded.

Each of A₁ and A₂ in the general formula (I) is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof.

The alkyl group having 4 or more carbon atoms and 18 or less carbon atoms may be linear or branched. The number of carbon atoms of the alkyl group is 4 or more and 18 or less, and the number of carbon atoms is preferably 6 or more, from the viewpoint of improving crystallization velocity, and the number of carbon atoms is preferably 15 or less, more preferably 12 or less, and even more preferably 10 or less, from the viewpoint of bleeding resistance. Specific examples include a butyl group, a pentyl group, a hexyl group a heptyl group, an octyl group, a nonyl group, a decyl group, an undecyl group, a dodecyl group, a hexadecyl group, an octadecyl group, and the like.

The number of carbon atoms of the aralkyl group having 7 or more carbon atoms and 18 or less carbon atoms is preferably 8 or more, from the viewpoint of improving crystallization velocity, and the number of carbon atoms is preferably 15 or less, more preferably 12 or less, and even more preferably 10 or less, from the viewpoint of bleeding resistance. Specific examples include a benzyl group, a phenethyl group, a phenylpropyl group, a phenylpentyl group, a phenylhexyl group, a phenylheptyl group, a phenyloctyl group, and the like.

In addition, the mono- or diether of a (poly)oxyalkylene adduct of the alkyl group or aralkyl group mentioned above includes a mono- or diether with a (poly)oxyalkylene group having an alkylene group having preferably from 2 to 10 carbon atoms, more preferably from 2 to 6 carbon atoms, and even more preferably from 2 to 4 carbon atoms. The (poly)oxyalkylene means an oxyalkylene or a polyoxyalkylene.

n in the general formula (I) is 0 or 1.

X in the general formula (I) is any one of -SO₂-, -O-, -CR₁R₂-, and -S-, and preferably -SO₂- or -O-, wherein each of R₁ and R₂ is independently H or an alkyl group having 4 or less carbon atoms. The alkyl group having 4 or less carbon atoms may be linear or branched, and includes, for example, a methyl group, an ethyl group, a propyl group, and a butyl group.

Each of R₃ and R₄ in the general formula (I) is independently any one of -O-, -CO-, and -CH₂-, with proviso that a case where both R₃ and R₄ are -O- is excluded.

Specific examples of the compounds represented by the general formula (I) include, for example, the following compounds:

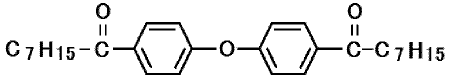

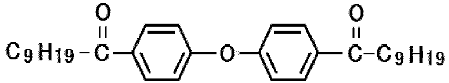

The above compound can be prepared in accordance with a known method. Alternatively, a commercially available product may be used.

In the present invention, other plasticizers besides the compound represented by the above general formula (I) can be used within the range that would not impair the effects of the present invention. Of the plasticizers usable in the present invention, i.e. all the plasticizers contained in the polyester resin composition of the present invention, the content of the above compound represented by the general formula (I) is preferably 50% by mass or more, more preferably 80% by mass or more, even more preferably 90% by mass or more, even more preferably 95% by mass or more, even more preferably substantially 100% by mass, and even more preferably 100% by mass. Here, the phrase substantially 100% by mass as used herein refers to a state in which impurities and the like are inevitably contained in a trace amount.

Other plasticizers include polyester-based plasticizers, polyhydric alcohol ester-based plasticizers, and polycarboxylic acid ester-based plasticizers.

Specific examples of the polyester-based plasticizers include polyesters obtained from a dicarboxylic acid having preferably from 2 to 12 carbon atoms, and more preferably from 2 to 6 carbon atoms, and a di-alcohol or a (poly)oxyalkylene adduct thereof having preferably from 2 to 12 carbon atoms, and more preferably from 2 to 6 carbon atoms, and the like. The dicarboxylic acid includes succinic acid, adipic acid, sebacic acid, phthalic acid, terephthalic acid, isophthalic acid, and the like, and the di-alcohol includes propylene glycol, 1,3-butanediol, 1,4-butanediol, 1,6-hexanediol, ethylene glycol, diethylene glycol, triethylene glycol, and the like. In addition, a hydroxyl group or a carboxy group at a polyester terminal may be esterified with a monocarboxylic acid or a mono-alcohol to cap.

Specific examples of the polyhydric alcohol ester-based plasticizer include mono-, di- or triesters of a polyhydric alcohol or a (poly)oxyalkylene adduct thereof, and a monocarboxylic acid having preferably from 1 to 12 carbon atoms, more preferably from 1 to 6 carbon atoms, and even more preferably from 1 to 4 carbon atoms, or the like. The polyhydric alcohol includes polyethylene glycols, polypropylene glycols, glycerol, the above di-alcohols, and the like. The monocarboxylic acid includes acetic acid, propionic acid, and the like.

The polycarboxylic acid ester-based plasticizer includes mono-, di- or triesters of a polycarboxylic acid, and a mono-alcohol or a (poly)oxyalkylene adduct thereof having preferably from 1 to 12 carbon atoms, more preferably from 1 to 6 carbon atoms, and even more preferably from 1 to 4 carbon atoms, or the like. The polycarboxylic acid includes trimellitic acid, the above dicarboxylic acids, and the like. The mono-alcohol includes methanol, ethanol, 1-propanol, 1-butanol, 2-ethylhexanol, and the like.

The content of the plasticizer, based on 100 parts by mass of the thermoplastic polyester resin (A), is preferably 0.5 parts by mass or more, more preferably 1 part by mass or more, even more preferably 3 parts by mass or more, and even more preferably 5 parts by mass or more, from the viewpoint of improving loss factor in the high-temperature region, and the content is preferably 50 parts by mass or less, more preferably 40 parts by mass or less, even more preferably 30 parts by mass or less, even more preferably 25 parts by mass or less, even more preferably 20 parts by mass or less, and even more preferably 15 parts by mass or less, from the viewpoint that the compound represented by the general formula (I) used in the present invention has excellent heat resistance, in addition to the viewpoint of suppressing the lowering of flexural modulus.

In addition, the content of the plasticizer in the polyester resin composition is preferably 1% by mass or more, more preferably 3% by mass or more, and even more preferably 5% by mass or more, from the viewpoint of improving loss factor, and the content is preferably 25% by mass or less, more preferably 20% by mass or less, and even more preferably 15% by mass or less, from the viewpoint of suppressing the lowering of flexural modulus.

### [Inorganic Filler (C)]

The polyester resin composition of the present invention contains an inorganic filler (C), from the viewpoint of improving flexural modulus. The inorganic filler (C) in the present invention is not particularly limited, so long as it is a known inorganic filler, and specifically, one or more members selected from the group consisting of plate-like fillers, granular fillers, acicular fillers, and fibrous fillers, that are preferably usable in the reinforcement of thermoplastic resins can be used.

The plate-like filler refers to those having an aspect ratio (length of the longest side of the largest surface of the plate-like filler/thickness of the surface) of 20 or more and 150 or less. The length of the plate-like filler (length of the longest side in the largest surface) is preferably 1.0 µm or more, more preferably 5 µm or more, even more preferably 10 µm or more, and even more preferably 20 µm or more, and preferably 150 µm or less, more preferably 100 µm or less, even more preferably 50 µm or less, even more preferably 40 µm or less, and even more preferably 30 µm or less, from the viewpoint of obtaining excellent dispersibility in the polyester resin composition, improving flexural modulus, and/or improving loss factor. The thickness is, but not particularly limited to, preferably 0.01 µm or more, more preferably 0.05 µm or more, even more preferably 0.1 µm or more, and even more preferably 0.2 µm or more, and preferably 5 µm or less, more preferably 3 µm or less, even more preferably 2 µm or less, even more preferably 1 µm or less, and even more preferably 0.5 µm or less, from the same viewpoint. In addition, the aspect ratio of the plate-like filler is preferably 30 or more, more preferably 40 or more, and even more preferably 50 or more, and preferably 120 or less, more preferably 100 or less, even more preferably 90 or less, and even more preferably 80 or less, from the same viewpoint. Specific examples of the plate-like filler include, for example, glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, plate-like barium sulfate, and the like. Among them, talc, mica, and plate-like barium sulfate are preferred, and talc and mica are more preferred, from the viewpoint of improving flexural modulus and suppressing the lowering of loss factor. The length and thickness of the plate-like filler can be obtained by observing randomly chosen 100 fillers with an optical microscope, and calculating an arithmetic mean thereof.

The granular fillers include not only those showing the true spherical form but also those that are cross-sectionally elliptic or substantially elliptic, and have an aspect ratio (longest diameter of the granular filler/shortest diameter of the granular filler) of 1 or more and less than 2, and one having an aspect ratio of nearly 1 is preferred. The average particle size of the granular filler is preferably 1.0 µm or more, more preferably 5 µm or more, even more preferably 10 µm or more, and even more preferably 20 µm or more, and preferably 50 µm or less, more preferably 40 µm or less, and even more preferably 30 µm or less, from the viewpoint of obtaining excellent dispersibility in the polyester resin composition, improving flexural modulus, and/or improving loss factor. Specific examples include kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, white clay, and the like. Among them, granular barium sulfate, aluminum hydroxide, and granular calcium carbonate are preferred, and granular calcium carbonate and granular barium sulfate are more preferred, from the viewpoint of improving flexural modulus and improving loss factor. Here, the diameter of the granular filler can be obtained by cutting 100 randomly chosen fillers, observing the cross sections with an optical microscope, and calculating an arithmetic mean thereof.

The acicular filler refers to those having an aspect ratio (particle length/particle size) within the range of 2 or more and less than 20. The length of the acicular filler (particle length) is preferably 1.0 µm or more, more preferably 5 µm or more, even more preferably 10 µm or more, even more preferably 20 µm or more, and even more preferably 30 µm or more, and preferably 150 µm or less, more preferably 100 µm or less, even more preferably 80 µm or less, and even more preferably 60 µm or less, from the viewpoint of obtaining excellent dispersibility in the polyester resin composition, improving flexural modulus, and/or improving loss factor. The particle size is, but not particularly limited to, preferably 0.01 µm or more, more preferably 0.1 µm or more, and even more preferably 0.5 µm or more, and preferably 20 µm or less, more preferably 15 µm or less, and even more preferably 10 µm or less, from the same viewpoint. In addition, the aspect ratio of the acicular filler is preferably 5 or more, and preferably 10 or less, from the same viewpoint. Specific examples of the acicular filler include, for example, potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and the like. Among them, potassium titanate whiskers and wollastonite are preferred. Here, the particle length and particle size of the acicular filler can be obtained by observing 100 randomly chosen fillers with an optical microscope, and calculating an arithmetic mean thereof. In a case where the particle size has a length and a breadth, the average particle size is calculated using the length.

The fibrous filler refers to those having an aspect ratio (average fiber length/average fiber diameter) of exceeding 150. The length of the fibrous filler (average fiber length) is preferably 0.15 mm or more, more preferably 0.2 mm or more, even more preferably 0.5 mm or more, and even more preferably 1 mm or more, and preferably 30 mm or less, more preferably 10 mm or less, and even more preferably 5 mm or less, from the viewpoint of improving flexural modulus and improving loss factor. The average fiber diameter is, but not particularly limited to, preferably 1 µm or more, and more preferably 3 µm or more, and preferably 30 µm or less, more preferably 20 µm or less, and even more preferably 10 µm or less, from the same viewpoint. In addition, the aspect ratio is preferably 200 or more, more preferably 250 or more, and even more preferably 500 or more, and preferably 10,000 or less, more preferably 5,000 or less, even more preferably 1,000 or less, and even more preferably 800 or less, from the same viewpoint. Specific examples of the fibrous filler include, for example, glass fibers, carbon fibers, graphite fibers, metal fibers, cellulose fibers, and the like. Among them, carbon fibers and glass fibers are preferred, and glass fibers are more preferred, from the same viewpoint. Here, the fiber length and fiber diameter of the fibrous filler can be obtained by observing 100 randomly chosen fillers with an optical microscope, and calculating an arithmetic mean thereof. In a case where the fiber diameter has a length and a breadth, the average fiber diameter is calculated using the length. In addition, as the fiber diameter not only those that are in a circular form where a length and a breadth are the same, but also those having different length and breadth such as an elliptic form (for example, length/breadth =4) or an eyebrow form (for example, length/breadth =2) may be used. On the other hand, when a resin and a fibrous filler are melt-kneaded in order to prepare a resin composition using a kneader such as a twin-screw extruder, although the fibrous filler is cut with a shearing force in the kneading portion to shorten the average fiber length, the average fiber length of the fibrous filler in the resin is preferably from 100 to 800 µm, more preferably from 200 to 700 µm, and even more preferably from 300 to 600 µm, from the viewpoint of flexural modulus.

The above granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.

These fillers can be used alone or in a combination of two or more kinds, and fillers having different shapes may be combined. Among them, from the viewpoint of improving flexural modulus and suppressing the lowering of loss factor, the filler is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers. Specifically, mica, talc, and glass fibers are preferably used, mica and talc are more preferably used, and mica is even more preferably used. The plate-like filler is oriented in the direction of flow in an injection molded article and the like, so that the tensile modulus in the oriented direction and the flexural modulus in a perpendicular direction to the oriented direction are remarkably improved, as compared to other fillers. Also, since there are many interfaces that influence frictions generated upon the vibrations of the molded article, it is assumed that the lowering of loss factor is further suppressed. The content of the plate-like filler is preferably 60% by mass or more, more preferably 80% by mass or more, and even more preferably 90% by mass or more, of the inorganic filler, from the viewpoint of suppressing the lowering of loss factor.

The content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, from the viewpoint of improving flexural modulus. In addition, the content is preferably 80 parts by mass or less, more preferably 70 parts by mass or less, even more preferably 60 parts by mass or less, even more preferably 50 parts by mass or less, and even more preferably 45 parts by mass or less, from the viewpoint of suppressing the lowering of loss factor. Here, the content of the inorganic filler refers to a total mass of the inorganic fillers used, and when plural compounds are contained, it means a total content.

In addition, in the polyester resin composition, the content of the inorganic filler is preferably 5% by mass or more, more preferably 10% by mass or more, even more preferably 15% by mass or more, even more preferably 20% by mass or more, and even more preferably 23% by mass or more, from the viewpoint of improving flexural modulus, and the content is preferably 40% by mass or less, more preferably 35% by mass or less, and even more preferably 30% by mass or less, from the viewpoint of suppressing the lowering of loss factor.

In the present invention, the mass ratio of the plasticizer (B) to the inorganic filler (C) (plasticizer (B) / inorganic filler (C)) is preferably from 10/90 to 60/40, and more preferably from 15/85 to 45/55, from the viewpoint of improving the elastic modulus and improving loss factor.

### [Organic Crystal Nucleating Agent (D)]

In addition, the polyester resin composition of the present invention can contain an organic crystal nucleating agent, from the viewpoint of improving crystallization velocity of the thermoplastic polyester resin, improving crystallinity of the thermoplastic polyester resin, and improving flexural modulus.

As the organic crystal nucleating agent, known organic crystal nucleating agents can be used, and organic metal salts of carboxylic acids, organic sulfonates, carboxylic acid amides, metal salts of phosphorus-containing compounds, metal salts of rosins, alkoxy metal salts, and organic nitrogen-containing compounds, and the like can be used. Specifically, for example, the organic metal salts of carboxylic acids include sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate. The organic sulfonates include sodium p-toluenesulfonate and sodium sulfoisophthalate. The carboxylic acid amides include stearamide, ethylenebis(lauric acid amide), palmitic acid amide, hydroxystearamide, erucic acid amide, and trimesic acid tris(t-butylamide). The metal salts of phosphorus-containing compounds include sodium-2,2'-methylenebis(4,6-di-t-butylphenyl) phosphate. The metal salts of rosins include sodium dehydroabietate and sodium dihydroabietate. The alkoxy metal salts include sodium 2,2-methylbis(4,6-di-t-butylphenyl). The organic nitrogen-containing compounds include ADK STAB NA-05 (trade name), manufactured by ADEKA. Other organic crystal nucleating agents include benzylidene sorbitol and derivatives thereof. Preferred are the organic metal salts of carboxylic acids, the metal salts of phosphorus-containing compounds, the alkoxy metal salts, and the organic nitrogen-containing compounds, and more preferred are sodium benzoate and ADK STAB NA-05 (trade name), from the viewpoint of improving crystallization velocity of the thermoplastic polyester resin and improving flexural modulus.

The content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, from the viewpoint of improving flexural modulus and loss factor, and the content is preferably 20 parts by mass or less, more preferably 10 parts by mass or less, even more preferably 5 parts by mass or less, even more preferably 3 parts by mass or less, and even more preferably 1 part by mass or less, from the viewpoint of improving flexural modulus and loss factor. Here, in the present specification, the content of the organic crystal nucleating agent means a total content of all the organic crystal nucleating agents contained in the polyester resin composition.

### [Elastomer (E)]

In addition, the polyester resin composition of the present invention can contain an elastomer within a range that would not impair the effects of the present invention, from the viewpoint of improving not only loss factor in the high-temperature region of the thermoplastic polyester resin, but also loss factor in other temperature regions such as the low-temperature regions at the same time. The elastomers can be used alone or in two or more kinds. As the elastomer in the present invention, a thermoplastic elastomer is preferred.

### (Thermoplastic Elastomer)

Since the polyester resin composition of the present invention contains a thermoplastic elastomer, energy loss would be exhibited in the resin portions of the thermoplastic elastomer, so that effects of even more improving vibration-damping properties are exhibited. Further, vibration-damping property in wide temperature regions of the high-temperature region and the low-temperature region can be improved by using the elastomer together with a plasticizer.

The thermoplastic elastomer has a glass transition temperature Tg of preferably -40°C or higher, and preferably 20°C or lower, from the viewpoint of improving vibration-damping properties in the high-temperature region and the low-temperature region.

The content of the thermoplastic elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, from the viewpoint of also improving loss factor in the low-temperature region. In addition, the content is preferably 50 parts by mass or less, more preferably 40 parts by mass or less, and even more preferably 35 parts by mass or less, from the viewpoint of suppressing the lowering of flexural modulus.

The content of the thermoplastic elastomer in the polyester resin molding composition is preferably 5% by mass or more, more preferably 10% by mass or more, and even more preferably 15% by mass or more, from the viewpoint of improving loss factor, and the content is preferably 30% by mass or less, more preferably 25% by mass or less, and even more preferably 20% by mass or less, from the viewpoint of suppressing the lowering of flexural modulus.

The thermoplastic elastomer in the present invention is preferably at least one member selected from styrenic thermoplastic elastomers, olefinic thermoplastic elastomers, polyester-based thermoplastic elastomers, polyamide-based thermoplastic elastomers, urethane-based thermoplastic elastomers, nitrile-based thermoplastic elastomers, fluorine-based thermoplastic elastomers, polybutadiene-based thermoplastic elastomers, and silicone-based thermoplastic elastomers. The styrenic thermoplastic elastomers include polystyrene-vinyl-polyisoprene-polystyrene block copolymers, copolymers of styrene and butadiene and hydrogenated product thereof, and examples are "HYBRAR" manufactured by KURARAY PLASTICS CO., Ltd., "Tuftec" and "S.O.E"(registered trademarks) manufactured by Asahi Kasei Corporation, "SEPTON"(registered trademark) manufactured by Kuraray Co., Ltd., "RABALON"(registered trademark) manufactured by Mitsubishi Chemical Corporation, and the like. The olefinic thermoplastic elastomers include those in which an olefinic rubber (EPR, EPDM) is finely dispersed in a matrix made of an olefinic resin (polyethylene, polypropylene, and the like), and examples are "THERMORAN" (registered trademark) manufactured by Mitsubishi Chemical Corporation, "ESPOLEX" (registered trademark) manufactured by Sumitomo Chemicals, Co., Ltd., and the like. The polyester-based thermoplastic elastomers include copolymers of polybutylene terephthalate and polyether, and the like, and examples are "Hytrel"(registered trademark) manufactured by DUPONT-TORAY CO., LTD., and the like. The polyamide-based thermoplastic elastomers include block copolymers of nylon with polyester or polyol or those in which a lactam or a polyether diol of a dicarboxylic acid as a raw material is subjected to transesterification and polycondensation reaction. The urethane-based thermoplastic elastomers are, for example, "TPU" manufactured by Nippon Polyurethane, Co., Ltd. The nitrile-based thermoplastic elastomers include those in which acrylonitrile and butadiene are subjected to emulsion polymerization, and the like. The fluorine-based thermoplastic elastomers include copolymers of vinylidene fluoride and hexafluoropropylene, copolymers of vinylidene fluoride, hexafluoropropylene, and tetrafluoroethylene, and the like, and examples are "FTOR" (registered trademark) manufactured by Showa Kobunshi Kabushiki Kaisha, "Viton" (registered trademark) Series manufactured by Dupont, and the like. The polybutadiene-based and the silicone-based thermoplastic elastomers include an organosilicon polymer binding product having a siloxane bond as a backbone in which an organic group or the like is directly bonded to the silicon atom and the like, and examples include KBM Series manufactured by Shin-Etsu Silicone, and the like. The thermoplastic elastomer is preferably a styrenic thermoplastic elastomer, from the viewpoint of improving vibration-damping properties in the high-temperature region and in the low-temperature region.

### (Styrenic Thermoplastic Elastomer)

The styrenic thermoplastic elastomer in the present invention (which may be hereinafter referred to as styrenic elastomer in some cases) is composed of a block A in which a styrenic compound constituting a hard segment is polymerized and a block B in which a conjugated diene constituting a soft segment is polymerized. The styrenic compound used in the polymer block A includes, for example, styrenic compounds such as styrene, α-methylstyrene, o-methylstyrene, m-methylstyrene, p-methylstyrene, and 1,3-dimethylstyrene; polycyclic aromatic compounds having a vinyl group such as vinylnaphthalene and vinylanthracene, and the like. Among them, the polymer of the styrenic compound is preferred, and the polymer of styrene is more preferred. The conjugated diene used in the polymer block B includes, for example, butadiene, isoprene, butylene, ethylene, 1,3-pentadiene, 2,3-dimethyl-1,3-butadiene, and the like, and preferably includes polyisoprene, polybutadiene, and copolymers of isoprene and butadiene, which is a block copolymer of one or more members selected from these conjugated diene monomers. In addition, in the block B, the styrenic compound used in the above polymer block A may be copolymerized. In the case of each of the copolymers, as the forms thereof, any of the forms of random copolymers, block copolymers, and tapered copolymers can be selected. In addition, the styrenic compound may have a hydrogenated structure.

Specific examples of the styrenic elastomer described above include polystyrene-isoprene block copolymers (SIS), polystyrene-polybutadiene copolymers (SEBS), polystyrene-hydrogenated polybutadiene copolymers (SEBS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These styrenic elastomers can be used alone in a single kind or in combination of two or more kinds. In the present invention, in particular, it is preferable to use a polystyrene-vinyl-polyisoprene-polystyrene block copolymer, and a commercially available product of the block copolymer as described above includes "HYBRAR" Series manufactured by KURARAY PLASTICS CO., Ltd.

The styrene content in the styrenic elastomer is preferably 10% by mass or more, and more preferably 15% by mass or more, and preferably 30% by mass or less, and more preferably 25% by mass or less, from the viewpoint of improving vibration-damping properties in the high-temperature region and the low-temperature region. Here, the high-temperature region as used herein means a temperature of from 35° to 80°C, and the low-temperature region as used herein means a temperature of from -20° to 10°C, and the styrene content of the styrenic elastomer can be measured in accordance with a known method using, for example, NMR.

The styrenic elastomer is preferably a styrene-isoprene block copolymer and/or a styrene-butadiene block copolymer.

### (Styrene-Isoprene Block Copolymer)

The styrene-isoprene block copolymer in the present invention is a block copolymer that has a polystyrene block at both the terminals, and at least one of the blocks of polyisoprene block or vinyl-polyisoprene block between the terminals. In addition, the block copolymer may be copolymerized with an isoprene block or butadiene block, or may have a hydrogenated structure.

Specific examples of the styrene-isoprene block copolymer mentioned above include, for example, polystyrene-isoprene block copolymers (SIS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These copolymers can be used alone, or in a combination of two or more kinds. In the present invention, among them, it is preferable to use the polystyrene-vinyl-polyisoprene-polystyrene block copolymers, and a commercially available product of the block copolymer as mentioned above includes "HYBRAR" Series, manufactured by Kuraray Plastics Co., Ltd.

### (Styrene-Butadiene Block Copolymer)

The styrene-butadiene block copolymer in the present invention is a block copolymer that has a polystyrene block at both the terminals, and the blocks of polybutadiene block or hydrogenated product thereof between the terminals. In addition, the block copolymer may be copolymerized with an isoprene block or butadiene block, or may have a hydrogenated structure.

Specific examples of the styrene-butadiene block copolymer described above include polystyrene-polybutadiene copolymers (SEBS), polystyrene-hydrogenated polybutadiene copolymers (SEBS), polystyrene-polybutadiene copolymers (SBS), polystyrene-hydrogenated polybutadiene copolymers (SBS), and the like. These copolymers may be used alone in a single kind or in a combination of two or more kinds. In the present invention, among them, it is preferable to use the polystyrene-hydrogenated polybutadiene copolymers (SEBS), and a commercially available product of the block copolymer described above includes "S.O.E" manufactured by ASAHI KASEI CHEMICALS.

The polyester resin composition of the present invention can contain, as other components besides those mentioned above, a chain extender, a lubricant, an inorganic crystal nucleating agent, a hydrolysis inhibitor, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a blowing agent, or the like, within the range that would not impair the effects of the present invention. In addition, other polymeric materials and other resin compositions can be contained within the range that would not inhibit the effects of the present invention.

The polyester resin composition of the present invention can be prepared without particular limitations so long as the composition contains a thermoplastic polyester resin (A), a plasticizer (B) represented by the general formula (I) defined above, and an inorganic filler (C). For example, the polyester resin composition can be prepared by melt-kneading raw materials containing a thermoplastic polyester resin, a compound represented by the general formula (I), and an inorganic filler, and further optionally various additives with a known kneader such as a closed kneader, a single-screw or twin-screw extruder, or an open roller-type kneader. After melt-kneading, the melt-kneaded product may be dried or cooled in accordance with a known method. The raw materials can also be subjected to melt-kneading after homogeneously mixing the raw materials with a Henschel mixer, a super mixer or the like in advance. Here, the melt-blending may be carried out in the presence of a supercritical gas in order to accelerate plasticity of the thermoplastic polyester resin when the raw materials are melt-kneaded.

The melt-kneading temperature cannot be unconditionally determined because the melt-kneading temperature depends upon the kinds of the thermoplastic polyester resin used, and the melt-kneading temperature is preferably 220°C or higher, more preferably 225°C or higher, and even more preferably 230°C or higher, and preferably 300°C or lower, more preferably 290°C or lower, and even more preferably 280°C or lower, from the viewpoint of improving moldability and prevention of deterioration of the polyester resin composition. The melt-kneading time cannot be unconditionally determined because the melt-kneading time depends upon the melt-kneading temperature and the kinds of a kneader, and the melt-kneading time is preferably from 15 to 900 seconds.

The polyester resin composition of the present invention thus obtained has a relative degree of crystallinity, based on crystal saturated polyester resins, of preferably 80% or more, and more preferably 90% or more, from the viewpoint of moldability. Here, if a relative degree of crystallinity as used herein is 80% or more, the crystallinity is high.

The polyester resin composition of the present invention has high heat resistance and has excellent moldability at a mold temperature of about 80°C or lower, so that the polyester resin composition can be suitably used as a vibration-damping material used in manufactured articles such as audio equipment, electric appliances, construction buildings, and industrial equipment, or parts or housing thereof, by using various mold-processing methods such as injection molding, extrusion molding or thermoforming.

For example, when the part or housing containing the polyester resin composition of the present invention is produced by injection molding, the part or housing is obtained by filling pellets of the above polyester resin composition in an injection-molding machine, and injecting molten pellets into a mold to mold.

In the injection molding, a known injection-molding machine can be used, including, for example, a machine comprising a cylinder and a screw inserted through an internal thereof as main constituting elements [J75E-D, J110AD-180H manufactured by The Japan Steel Works, Ltd. or the like]. Here, although the raw materials for the above-mentioned polyester resin composition may be supplied to a cylinder and directly melt-kneaded, it is preferable that a product previously melt-kneaded is filled in an injection-molding machine.

The set temperature of the cylinder is preferably 220°C or higher, and more preferably 230°C or higher, from the viewpoint of controlling crystallinity of the resin molding composition obtained. Also, the set temperature is preferably 290°C or lower, and more preferably 280°C or lower. When a melt-kneader is used, the set temperature means a set temperature of the cylinder of the kneader during melt-kneading. Here, the cylinder comprises some heaters, by which temperature control is carried out. The number of heaters cannot be unconditionally determined because the number depends on the kinds of machines, and it is preferable that the heaters controlled to the above-mentioned set temperature are present at least at the discharge outlet side of the melt-kneaded product, i.e. the side of tip end of nozzle.

The mold temperature cannot be unconditionally determined because the mold temperature depends upon the kinds of the thermoplastic polyester resin used. For example, in a case of a polyethylene terephthalate resin, the mold temperature is preferably 150°C or lower, more preferably 140°C or lower, and even more preferably 130°C or lower, from the viewpoint of improving the crystallization velocity of the polyester resin composition of the present invention and improving operability, and from the viewpoint of controlling absolute degree of crystallinity of the polyester resin composition of the present invention. Although the lower limit of the mold temperature is not particularly set, it is preferably, for example, 20°C or higher. The holding time inside the mold cannot be unconditionally determined because the holding time differs depending upon the temperature of the mold. The holding time is preferably from 5 to 100 seconds, from the viewpoint of improving productivity of the molded article.

In addition, when a molding method other than the injection molding is used, molding may be carried out in accordance with a known method without particular limitations. It is preferable that the mold temperature is also set within the temperature range mentioned above.

The molded article of the polyester resin composition of the present invention thus obtained can be suitably used as vibration-damping materials or the like used in manufactured articles such as audio equipment, electric appliances, construction buildings, and industrial equipment, or parts or housing thereof. In addition, since the molded article of the polyester resin composition of the present invention has a high flexural modulus even as a single material, the polyester resin composition has an excellent vibration-damping property of being capable of sufficiently keeping the shape with a single material without having to use a high-rigidity material such as a metal steel plate, and can be preferably used in manufactured articles that are required to be light-weighted of automobiles, railcars, airplanes, or the like, or parts or housing thereof. Accordingly, the present invention also provides a vibration-damping material containing a polyester resin composition of the present invention.

The applications of the polyester resin composition of the present invention to vibration-damping materials include as follows: Speakers, television, radio cassette recorders, headphones, audio components, microphones, audio players, compact disc players, floppy(registered trademark), video players, etc. as materials for audio equipment housings; further electromotive tools such as electromotive drills and electromotive drivers, electric appliances with cooling functions such as computers, projectors, servers, and POS systems, washing machines, clothes dryers, air-conditioned indoor units, sewing machines, dishwashers, multifunctional photocopier machines, printers, scanners, hard disk drives, video cameras, humidifiers, air cleaners, cellular phones, dryers, etc. as materials for parts and housings of electric appliances with electromotive motors; electromotive toothbrushes, electromotive shavers, massaging machines, etc. as materials for parts and housings of vibrated source-containing electric appliances; generators, gas generators, etc. as materials for parts and housings of electric appliances with motors; refrigerators, automatic vending machines, air-conditioned external machines, dehumidifiers, domestic generators etc. as materials for parts and housings of electric appliances with compressors; materials for interior materials such as dashboards, instrumental panels, floor, doors, and roofs, engine-related materials such as oil pans, front cover, and locker cover, car navigation, door trim, gear box, dash silencer, module carrier, etc. as materials for automobile parts; soundproof plates, road lighting luminaires, ETC (Electronic Toll Collection) facility members, etc. as materials for roads; interior materials such as floor, walls, side plates, ceiling, doors, chairs, and tables, housings or parts of motor-related area, gear case, pantagraph covers, various protective covers, etc. as materials for railcar parts; interior materials such as floor, walls, side plates, ceiling, chairs, and tables, housings or parts in the engine-related parts etc. as materials for airplane parts; housings or wall materials for engine room, housings or wall materials for instrumental measurement room, as materials for ship parts; walls, ceiling, floor, partition boards, soundproof walls, shutters, curtain rails, pipe ducts, staircases, doors, window frames, etc. as materials for construction; shooters, elevators (lifts), winches or hoists, escalators, conveyors, tractors, bulldozers, lawn mowers, etc. as materials for industrial equipment parts; respiratory organ-associated equipment, ear, nose and throat (ENT)-associated equipment, dental equipment, surgical equipment, etc. as materials for parts and housing of medical equipment, and the like.

The applications of the polyester resin composition of the present invention to manufactured articles such as audio equipment, electric appliances, transportation vehicles, construction buildings, and industrial equipment, or parts or housings thereof can be appropriately set according to the methods for producing parts, housings, apparatuses, and equipment, applied parts, and intended purposes.

The present invention also provides a method for producing a part or housing containing a polyester resin composition of the present invention.

The method for production is not particularly limited so long as the method includes the step of injection-molding a polyester resin composition of the present invention, and steps can be appropriately added depending upon the kinds of the molded articles obtained.

Specifically, the embodiment includes the following steps:
step (1): melt-kneading a polyester resin composition containing a thermoplastic polyester resin (A), a plasticizer (B) represented by the general formula (I), and an inorganic filler (C), to prepare a melt-kneaded product of a polyester resin composition; and
step (2): injection-molding a melt-kneaded product of the polyester resin composition obtained in the step (1) within a mold.

The step (1) is a step to prepare a melt-kneaded product of a polyester resin composition. Specifically, a melt-kneaded product can be prepared by melt-kneading raw materials containing a thermoplastic polyester resin (A), a plasticizer (B) represented by the general formula (I), and an inorganic filler (C), and optionally various additives at a temperature of preferably 220°C or higher, more preferably 225°C or higher, and even more preferably 230°C or higher, and preferably 300°C or lower, more preferably 290°C or lower, and even more preferably 280°C or lower.

The step (2) is a step of injection-molding a melt-kneaded product of the polyester resin composition. Specifically, a melt-kneaded product obtained in the step (1) can be filled into an injection-molding machine equipped with a cylinder previously heated to preferably 220°C or higher, and more preferably 230°C or higher, and preferably 290°C or lower, and more preferably 280°C or lower, and injected into a mold at a temperature of preferably 150°C or lower, more preferably 140°C or lower, and even more preferably 130°C or lower, and preferably 20°C or higher, more preferably 30°C or higher, and even more preferably 40°C or higher to mold.

The injection-molded article of the present invention thus obtained can be suitably used as a part or housing containing a vibration-damping material.

With respect to the above-mentioned embodiments, the present invention further discloses the following polyester resin compositions and use thereof.
<1> A polyester resin composition for vibration-damping material containing:
   a thermoplastic polyester resin (A) constituted of a dicarboxylic acid component and a diol component,
   a plasticizer (B) represented by the general formula (I): 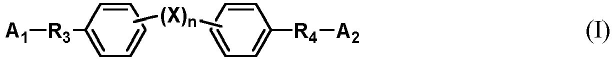 wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and -CH₂-, with proviso that a case where both R₃ and R₄ are -O- is excluded, and
   an inorganic filler (C).
<2> The polyester resin composition according to the above <1>, wherein the dicarboxylic acid component constituting the thermoplastic polyester resin (A) is one or more members selected from the group consisting of aliphatic dicarboxylic acids, alicyclic dicarboxylic acids, aromatic dicarboxylic acids, and dicarboxylic acids having a furan structure.
<3> The polyester resin composition according to the above <1> or <2>, wherein the diol component constituting the thermoplastic polyester resin (A) is one or more members selected from the group consisting of aliphatic diols, alicyclic diols, aromatic diols, and diols having a furan ring.
<4> The polyester resin composition according to any one of the above <1> to <3>, wherein in a case where the dicarboxylic acid component constituting the thermoplastic polyester resin (A) is one or more members selected from the group consisting of aromatic dicarboxylic acids, alicyclic dicarboxylic acids, and dicarboxylic acids having a furan, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols.
<5> The polyester resin composition according to any one of the above <1> to <3>, wherein in a case where the dicarboxylic acid component constituting the thermoplastic polyester resin (A) is an aliphatic dicarboxylic acid, preferred are combinations thereof with one or more members selected from the group consisting of aromatic diols, alicyclic diols, and diols having a furan ring, and more preferred are combinations thereof with one or more aromatic diols.
<6> The polyester resin composition according to any one of the above <1> to <5>, wherein as the dicarboxylic acid component constituting the thermoplastic polyester resin (A), one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred.
<7> The polyester resin composition according to any one of the above <1> to <6>, wherein as the diol component constituting the thermoplastic polyester resin (A), one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran are more preferred.
<8> The polyester resin composition according to any one of the above <1> to <7>, wherein the thermoplastic polyester resin (A) has a glass transition temperature (Tg) of preferably 20°C or higher, more preferably 25°C or higher, even more preferably 30°C or higher, and still even more preferably 35°C or higher, and preferably 160°C or lower, more preferably 150°C or lower, even more preferably 140°C or lower, and still even more preferably 130°C or lower.
<9> The polyester resin composition according to any one of the above <1> to <8>, wherein the thermoplastic polyester resin (A) has crystallization enthalpy ΔHmc obtained from areas of exothermic peaks along with crystallization of preferably 5 J/g or more, more preferably 10 J/g or more, even more preferably 15 J/g or more, and even more preferably 30 J/g or more, when a resin is heated from 25°C to 300°C at a heating rate of 20°C/min, held in that state for 5 minutes, and thereafter cooled to 25°C or lower at a rate of -20°C/min.
<10> The polyester resin composition according to any one of the above <1> to <9>, wherein the thermoplastic polyester resin (A) is preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, 1,4-cyclohexanedimethylene terephthalate constituted of terephthalic acid and 1,4-cyclohexanedimethanol, polyethylene naphthalate constituted of 2,6-naphthalenedicarboxylic acid and ethylene glycol, a polybutylene naphthalate constituted of 2,6-naphthalenedicarboxylic acid and 1,4-butanediol, a polyethylene furanoate constituted of 2,5-furandicarboxylic acid and ethylene glycol, and a polybutylene furanoate constituted of 2,5-furandicarboxylic acid and 1,4-butanediol, and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol.
<11> The polyester resin composition according to any one of the above <1> to <10>, wherein the content of the thermoplastic polyester resin (A) in the polyester resin composition is preferably 50% by mass or more, more preferably 55% by mass or more, and even more preferably 60% by mass or more, and preferably 90% by mass or less, more preferably 80% by mass or less, even more preferably 75% by mass or less, and even more preferably 70% by mass or less.
<12> The polyester resin composition according to any one of the above <1> to <11>, wherein the alkyl group having 4 or more carbon atoms and 18 or less carbon atoms in the general formula (I) may be linear or branched, and wherein the number of carbon atoms of the alkyl group is preferably 6 or more, and preferably 15 or less, more preferably 12 or less, and even more preferably 10 or less.
<13> The polyester resin composition according to any one of the above <1> to <12>, wherein the aralkyl group having 7 or more carbon atoms and 18 or less carbon atoms in the general formula (I) has the number of carbon atoms of preferably 8 or more, and preferably 15 or less, more preferably 12 or less, and even more preferably 10 or less.
<14> The polyester resin composition according to any one of the above <1> to <13>, wherein the mono- or diether of a (poly)oxyalkylene adduct of the alkyl group or aralkyl group includes an mono- or diether with a (poly)oxyalkylene adduct having an alkylene group having preferably from 2 to 10 carbon atoms, more preferably from 2 to 6 carbon atoms, and even more preferably from 2 to 4 carbon atoms.
<15> The polyester resin composition according to any one of the above <1> to <14>, wherein X in the general formula (I) is preferably -SO₂- or -O-.
<16> The polyester resin composition according to any one of the above <1> to <15>, wherein specific examples of the plasticizer represented by the general formula (I) include the following compounds: 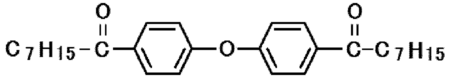 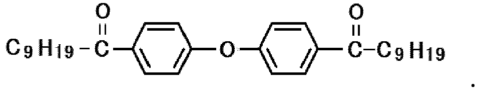
<17> The polyester resin composition according to any one of the above <1> to <16>, wherein the content of the plasticizer (B) represented by the general formula (I) is preferably 50% by mass or more, more preferably 80% by mass or more, even more preferably 90% by mass or more, even more preferably 95% by mass or more, even more preferably substantially 100% by mass, and even more preferably 100% by mass, of all the plasticizer contained in the polyester resin composition.
<18> The polyester resin composition according to any one of the above <1> to <17>, wherein the content of the plasticizer, based on 100 parts by mass of the thermoplastic polyester resin (A), is preferably 0.5 parts by mass or more, more preferably 1 part by mass or more, even more preferably 3 parts by mass or more, and even more preferably 5 parts by mass or more, and preferably 50 parts by mass or less, more preferably 40 parts by mass or less, even more preferably 30 parts by mass or less, even more preferably 25 parts by mass or less, even more preferably 20 parts by mass or less, and even more preferably 15 parts by mass or less.
<19> The polyester resin composition according to any one of the above <1> to <18>, wherein the content of the plasticizer in the polyester resin composition is preferably 1% by mass or more, more preferably 3% by mass or more, and even more preferably 5% by mass or more, and preferably 25% by mass or less, more preferably 20% by mass or less, and even more preferably 15% by mass or less.
<20> The polyester resin composition according to any one of the above <1> to <19>, wherein it is preferable that the inorganic filler (C) contains one or more members selected from the group consisting of plate-like fillers, granular fillers, acicular fillers, and fibrous fillers.
<21> The polyester resin composition according to the above <20>, wherein the plate-like filler has an aspect ratio (length of the longest side of the largest surface of the plate-like filler/thickness of the surface) of 20 or more and 150 or less, and wherein the plate-like filler is preferably glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, and plate-like barium sulfate, more preferably talc, mica, and plate-like barium sulfate, and even more preferably talc and mica.
<22> The polyester resin composition according to the above <20>, wherein the granular filler has an aspect ratio (longest diameter of the granular filler/shortest diameter of the granular filler) of 1 or more and less than 2, and one having an aspect ratio of nearly 1 is preferred, and wherein the granular filler is preferably kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, and white clay, more preferably granular barium sulfate, aluminum hydroxide, and granular calcium carbonate, and even more preferably granular calcium carbonate and granular barium sulfate.
<23> The polyester resin composition according to the above <20>, wherein the acicular filler has an aspect ratio (particle length/particle size) within the range of 2 or more and less than 20, and wherein the acicular filler is preferably potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and more preferably potassium titanate whiskers and wollastonite.
<24> The polyester resin composition according to the above <20>, wherein the fibrous filler has an aspect ratio (average fiber length/average fiber diameter) of exceeding 150, and wherein the fibrous filler is preferably glass fibers, carbon fibers, graphite fibers, metal fibers, and cellulose fibers, more preferably carbon fibers and glass fibers, and even more preferably glass fibers.
<25> The polyester resin composition according to any one of the above <20> to <23>, wherein the granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.
<26> The polyester resin composition according to any one of the above <1> to <25>, wherein the inorganic filler (C) is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers.
<27> The polyester resin composition according to any one of the above <1> to <26>, wherein mica, talc, and glass fibers are preferably used, mica and talc are more preferably used, and mica is even more preferably used.
<28> The polyester resin composition according to any one of the above <20> to <27>, wherein the content of the plate-like filler is preferably 60% by mass or more, more preferably 80% by mass or more, and even more preferably 90% by mass or more, of the inorganic filler (C).
<29> The polyester resin composition according to any one of the above <1> to <28>, wherein the content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, and preferably 80 parts by mass or less, more preferably 70 parts by mass or less, even more preferably 60 parts by mass or less, even more preferably 50 parts by mass or less, and even more preferably 45 parts by mass or less.
<30> The polyester resin composition according to any one of the above <1> to <29>, wherein in the polyester resin composition, the content of the inorganic filler is preferably 5% by mass or more, more preferably 10% by mass or more, even more preferably 15% by mass or more, even more preferably 20% by mass or more, and even more preferably 23% by mass or more, and preferably 40% by mass or less, more preferably 35% by mass or less, and even more preferably 30% by mass or less.
<31> The polyester resin composition according to any one of the above <1> to <30>, wherein the mass ratio of the component (B) to the inorganic filler (C) (component (B) / inorganic filler (C)) is preferably from 10/90 to 60/40, and more preferably from 15/85 to 45/55.
<32> The polyester resin composition according to any one of the above <1> to <31>, further containing an organic crystal nucleating agent (D).
<33> The polyester resin composition according to the above <32>, wherein the content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, and preferably 20 parts by mass or less, more preferably 10 parts by mass or less, even more preferably 5 parts by mass or less, even more preferably 3 parts by mass or less, and even more preferably 1 part by mass or less.
<34> The polyester resin composition according to any one of the above <1> to <33>, which is prepared by melt-kneading raw materials containing a thermoplastic polyester resin (A), a plasticizer (B) represented by the general formula (I), and an inorganic filler (C).
<35> The polyester resin composition according to the above <34>, wherein the melt-kneading temperature is preferably 220°C or higher, more preferably 225°C or higher, and even more preferably 230°C or higher, and preferably 300°C or lower, more preferably 290°C or lower, and even more preferably 280°C or lower.
<36> The polyester resin composition according to any one of the above <1> to <35>, further containing an elastomer, preferably a thermoplastic elastomer, more preferably a styrenic thermoplastic elastomer, and even more preferably a styrene-isoprene block copolymer and/or a styrene-butadiene block copolymer.
<37> The polyester resin composition according to the above <36>, wherein the content of the elastomer, preferably a thermoplastic elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, and preferably 50 parts by mass or less, more preferably 40 parts by mass or less, and even more preferably 35 parts by mass or less.
<38> Use of a polyester resin composition as defined in any one of the above <1> to <37> as a vibration-damping material.
<39> A manufactured article such as audio equipment, electric appliances, transportation vehicles, construction buildings, and industrial equipment, or parts or housing thereof, obtainable by filling a polyester resin composition as defined in any one of the above <1> to <37> <35> in an injection-molding machine, and injecting into a mold to mold.
<40> A method for producing a part or housing, including the following steps of:
   step (1): melt-kneading a polyester resin composition containing a thermoplastic polyester resin (A), a plasticizer (B) represented by the general formula (I), and an inorganic filler (C), to prepare a melt-kneaded product of the polyester resin composition; and
   step (2): injection-molding the melt-kneaded product of the polyester resin composition obtained in the step (1) in a mold.

### EXAMPLES

The present invention will be described more specifically by means of the following Examples. The examples are given solely for the purposes of illustration and are not to be construed as limitations of the present invention. Parts in Examples are parts by mass unless specified otherwise. Here, "ambient pressure" means 101.3 kPa, and "room temperature" means 25°C.

### Production Example 1 of Plasticizer (Compound 1) BKO-C9 (4,4'-Dinonyl ketone diphenyl ether compound)

The amount 57.2 g (0.34 mol) of diphenyl ether manufactured by Wako Pure Chemical Industries Ltd., 112 g (0.84 mol) of (anhydrous) aluminum hydroxide manufactured by Wako Pure Chemical Industries Ltd. as a catalyst, and 560 mL of super dehydrated dichloromethane manufactured by Wako Pure Chemical Industries Ltd. were added to a 1 L-4-neck flask equipped with a thermometer, a dropping funnel, and a nitrogen blowing tube, and the mixture was cooled to 0°C at an ambient pressure under a nitrogen atmosphere, and stirred for 15 minutes. A mixed solution of 141 g (0.74 mol) of decanoyl chloride manufactured by Wako Pure Chemical Industries Ltd. and 100 mL of dichloromethane was added dropwise thereto at 0°C, the mixture was stirred for 20 minutes, the temperature was then raised to room temperature, and the mixture was stirred for 12 hours. After the termination of the reaction, the mixture was poured into 1 L of a 2 N hydrochloric acid at 0°C, and 1 L of dichloromethane was added thereto to extract. The organic layers were combined, washed with water and a saturated brine, and dried over anhydrous magnesium sulfate, the desiccant was separated by filtration, and the solvents were distilled off under a reduced pressure. The resulting crude product was dissolved in chloroform, and hexane was added thereto to re-precipitate, to provide white crystals (Compound 1).

### Example 1 and Comparative Example 1

Raw materials for polyester resin compositions as listed in Table 1 were melt-kneaded at 280°C with an intermeshing co-rotating twin-screw extruder manufactured by The Japan Steel Works, Ltd., TEX-28V, and strand-cut, to provide pellets of the polyester resin compositions. Here, the pellets obtained were subjected to dehumidification drying at 110°C for 3 hours, to adjust its water content to 500 ppm or less.

The pellets obtained were injection-molded with an injection-molding machine manufactured by The Japan Steel Works, Ltd., J110AD-180H, cylinder temperatures set at 6 locations, of which cylinder temperature was set at 270°C for the sections up to fifth units from the nozzle end side, at 230°C for the remaining one unit, and at 45°C for the section below the hopper, to mold into flat plate test pieces (127 mm × 12.7 mm × 1.6 mm) at a mold temperature set to 80°C, to provide a molded article of the polyester resin composition.

Here, the raw materials in Table 1 are as follows.

### [Thermoplastic Polyester Resin]

PET: A polyethylene terephthalate resin, RT-553C manufactured by Japan Unipet Co., Ltd., unreinforced, glass transition point: 70°C, crystallization enthalpy ΔHmc: 42 J/g

### [Plasticizer]

BKO-C9: Compound 1 prepared in Production Example 1 of Plasticizer, molecular weight: 479

### [Inorganic Filler]

Mica: A-21S manufactured by YAMAGUCHI MICA CO., LTD., length of the longest side of the largest surface: 23 µm, thickness of the largest surface: 0.33 µm, aspect ratio: 70

### [Crystal Nucleating Agent]

Sodium Benzoate: Sodium benzoate manufactured by Wako Pure Chemical Industries, Ltd.

The properties of the molded articles obtained were evaluated in accordance with the methods of the following Test Examples 1 to 3. The results are shown in Table 1.

### Test Example 1 Vibration-Damping Property

With respect to flat test pieces having dimensions of 127 mm × 12.7 mm × 1.6 mm, the loss factor was calculated in accordance with half band width method from peaks of secondary resonance of the frequency response function measured according to a central excitation method as prescribed in JIS K7391. A system comprising Type 3160 as an oscillator, Type 2718 as an amplifier, Type 4810 as an exciter, and Type 8001 as an accelerator sensor was used, all of which are manufactured by B & K, and a loss factor measurement software MS 18143 was used. The measurement environment was controlled with a thermostat PU-3J manufactured by ESPEC Corporation, and measurements were taken at 70°C. It can be judged that if a loss factor is preferably 0.05 or more, and more preferably 0.06 or more, it is a high loss factor, so that the vibration-damping property is high. It can be judged that the higher the numerical values, the greater the effects.

### Test Example 2 - Rigidity

With respect to flat test pieces having dimensions of 127 mm × 12.7 mm × 1.6 mm, a dynamic modulus at 70°C was calculated by a method of calculating a modulus of longitudinal elasticity from secondary frequency of the frequency response function measured according to a central excitation method as prescribed in JIS K7391. The measurement apparatus was employed by the same method as in Test Example 1. If the dynamic modulus is 3.5 GPa or more, it can be judged to have excellent rigidity.

### Test Example 3 - Heat Resistance

With respect to rectangular test pieces having dimensions of 127 mm × 12.7 mm × 1.6 mm, one end of which was fixed with a jig and a free end length was 100 mm, a temperature at which a free tip end was bowed 20 mm by deflection with deadweight at a heating rate of 10°C/minute was obtained as a deflection temperature with deadweight. The higher the numerical values, it is shown that the more excellent the heat resistance.

### [Table 1]

**Table 1**

| | | Ex. | Comp. Ex. |
|---|---|---|---|
| | | 1 | 1 |
| Resin | PET | 100 | 100 |
| Plasticizer | BKO-C9 | 8 | - |
| Inorganic Filler | Mica | 40 | 40 |
| Organic Crystal Nucleating Agent | Sodium Benzoate | 1 | 1 |
| Mass Ratio of Plasticizer to Inorganic Filler [Plasticizer/Inorganic Filler] | | 17/83 | - |
| Vibration-Damping Property at 70°C | Loss Factor - Central Excitation Method/ Secondary Resonance | 0.084 | 0.013 |
| Rigidity at 70°C | Dynamic Modulus, GPa | 4.9 | 5.0 |
| Heat Resistance | Deflection Temperature with Deadweight, °C | 160 | 98 |

| | | | |
|---|---|---|---|
| *: The amount of the raw materials used is expressed by parts by mass. | | | |

As a result, as shown in Table 1, it can be seen that the polyester resin composition containing a plasticizer having a particular structure also has excellent vibration-damping property while having excellent rigidity in the high-temperature region, and that the polyester resin composition also has excellent heat resistance.

### INDUSTRIAL APPLICABILITY

The polyester resin composition of the present invention can be suitably used as a vibration-damping material in, for example, manufactured articles, such as materials for audio equipment such as speakers, television, radio cassette recorders, headphones, audio components, or microphones, electric appliances, transportation vehicles, construction buildings, and industrial equipment, or parts or housing thereof.

## Claims

1. A polyester resin composition for vibration-damping material comprising:
a thermoplastic polyester resin (A) constituted of a dicarboxylic acid component and a diol component,
a plasticizer (B) represented by the general formula (I): 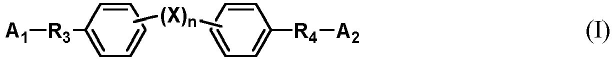
wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and - CH₂-, with proviso that a case where both R₃ and R₄ are -O- is excluded, and
an inorganic filler (C).

2. The polyester resin composition according to claim 1, wherein the dicarboxylic acid component in the thermoplastic polyester resin (A) comprises one or more members selected from the group consisting of aliphatic dicarboxylic acids, alicyclic dicarboxylic acids, aromatic dicarboxylic acids, and dicarboxylic acids having a furan structure.

3. The polyester resin composition according to claim 1 or 2, wherein the diol component in the thermoplastic polyester resin (A) comprises one or more members selected from the group consisting of aliphatic diols, alicyclic diols, aromatic diols, and diols having a furan structure.

4. The polyester resin composition according to any one of claims 1 to 3, wherein the alkyl group in the general formula (I) is a linear or branched alkyl group, wherein the number of carbon atoms of the alkyl group is from 6 or more and 15 or less.

5. The polyester resin composition according to any one of claims 1 to 4, wherein the number or carbon atoms of the aralkyl group in the general formula (I) is 8 or more and 15 or less.

6. The polyester resin composition according to any one of claims 1 to 5, wherein the (poly)oxyalkylene adduct in the general formula (I) is a (poly)oxyalkylene adduct having an alkylene group having from 2 to 10 carbon atoms.

7. The polyester resin composition according to any one of claims 1 to 6, wherein X in the general formula (I) is -SO₂- or -O-.

8. The polyester resin composition according to any one of claims 1 to 7, wherein the plasticizer (B) represented by the general formula (I) is the following compound:

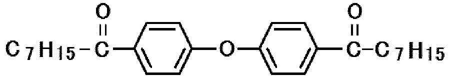

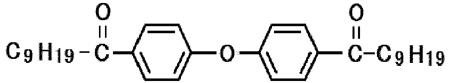

9. The polyester resin composition according to any one of claims 1 to 8, wherein the content of the plasticizer (B) represented by the general formula (I) in all the plasticizers contained in the polyester resin composition is 50% by mass or more.

10. The polyester resin composition according to any one of claims 1 to 9, wherein the inorganic filler (C) is a plate-like filler.

11. The polyester resin composition according to any one of claims 1 to 10, wherein the inorganic filler (C) is mica.

12. The polyester resin composition according to any one of claims 1 to 11, wherein the content of the inorganic filler (C) is 10 parts by mass or more and 80 parts by mass or less, based on 100 parts by mass of the thermoplastic polyester resin (A).

13. The polyester resin composition according to any one of claims 1 to 12, wherein the mass ratio of the component (B) to the inorganic filler (C), i.e. component (B)/inorganic filler (C), is from 10/90 to 60/40.

14. A vibration-damping material comprising a polyester resin composition as defined in any one of claims 1 to 13.

15. A method for producing a part or housing, comprising the following steps of:
step (1): melt-kneading a polyester resin composition comprising a thermoplastic polyester resin (A), a plasticizer (B) represented by the general formula (I), and an inorganic filler (C), to prepare a melt-kneaded product of the polyester resin composition; and
step (2): injection-molding the melt-kneaded product of the polyester resin composition obtained in the step (1) in a mold.
